# EUROPEAN PATENT SPECIFICATION

(11) **EP 0 710 612 B1**
(45) Date of publication and mention of the grant of the patent: **10.06.1998**
(21) Application number: 95202610.2
(22) Date of filing: 28.09.1995
(51) Int. Cl.: B65G 17/10, B65G 17/32

(54) **An endless conveyor**
Endlosförderer
Convoyeur sans fin

(30) Priority: 01.11.1994 NL 9401808; 25.01.1995 NL 9500134
(43) Date of publication of application: 08.05.1996
(73) Proprietor: VANDERLANDE INDUSTRIES NEDERLAND B.V., NL-5466 RB Veghel (NL)
(72) Inventor: Bodewes, Harmannus, J.A., NL-5403 LC Uden (NL); Van den Goor, Jacobus Marie, NL-5674 SH Nuenen (NL)
(74) Representative: Vollebregt, Cornelis Jacobus, Ir.

(56) References cited:
- DE-C- 629 990
- US-A- 3 777 877

## Description

The invention relates to an endless conveyor provided with a plurality of pivotally coupled receiving means for receiving objects to be transported, said receiving means each being provided with two plate-shaped parts including an obtuse angle with each other, whereby the plate-shaped parts of adjacent receiving means partially overlap and are capable of sliding movement over each other, whilst one plate-shaped part has a greater length than a plate-shaped part being adjacent thereto, seen in cross-sectional view.

From German Patent 629990 a conveyor of the above kind is known. In a first embodiment shown in said German Patent 629990 each receiving means is provided with two abutting plate-shaped parts, which slope upwards at the same angle with the horizontal from their abutment and which have the same length, seen in cross-sectional view. In a second embodiment of this known device a receiving means is provided with a horizontally extending plate-shaped part, whose outer edges are in abutment with further plate-shaped parts sloping upwards at the same angle in a direction away from each other, which parts are shorter than the horizontal part, seen in cross-sectional view.

Goods placed on receiving means of this type will tend to take up position in the centre of the receiving means or on the horizontal plate-shaped part of the receiving means, as a result of which objects present on the plate-shaped receiving means cannot be readily removed therefrom by a person who has taken up position near one side of the conveyor.

The present application more in particular relates to conveyors which are used for transporting luggage at airports and the like of the type disclosed in US Patent 3,777,877, whereby luggage, such as suitcases, supplied by the conveyor are to be removed from the conveyor by persons standing near one side of the conveyor.

With conveyors of the type disclosed in US Patent 3,777,877, which have been used for many years already, the plate-shaped parts of a receiving means include an angle of 90° with each other. In order to be able to remove objects, such as suitcases or the like, from receiving means of this type, the conveyor must be disposed at a low position. This implies, however, that the person who has to remove an object from such a receiving means, needs to stoop to take hold of the object, whilst the object must thereby be lifted over the plate-shaped part, which is disposed on the side of the conveyor where the person in question is standing and which extends at a relatively large angle with the horizontal. In particular with heavy objects, such as heavy suitcases, rather much force is required of the person lifting said object, precisely at a moment when he is in a disadvantageous stooped position. This will lead to back trouble. A further drawback of this known construction is that the receiving means can only pivot to a limited extent with respect to each other, and that particularly in only one direction.

Furthermore conveyors for transporting objects, in particular luggage, are known whereby receiving means comprising only a single flat plate-shaped part are utilized. When using a conveyor of this type there is a danger that objects, such as suitcases or the like, will move with respect to the receiving means upon being placed on the receiving means or when being moved by said means, in such a manner that they fall off the receiving means.

A further drawback of the known conveyors is that in particular leather suitcases tend to "stick" to the receiving means, which makes removing the suitcases extra difficult and burdensome.

According to the invention the shorter (seen in cross-sectional view) plate-shaped part extends from its abutment with the longer plate-shaped part in the direction of the side of the conveyor where the objects present on the receiving means are removed from the conveyor at an angle with the horizontal which is smaller than the angle which the longer (seen in cross-sectional view) plate-shaped part, which extends from its point of abutment with the shorter plate-shaped part in a direction away from the side of the conveyor where the objects present on the conveyor are removed, includes with the horizontal.

Surprisingly it has become apparent that by using the construction according to the invention the drawbacks of the known conveyors of the above type can be avoided in a simple manner. Objects present on the receiving means can be readily lifted or slid from the conveyor near the side of the conveyor where the shorter (seen in cross-sectional view) plate-shaped parts are located, in particular since larger suitcases will generally only be supported on the receiving means with two opposite ends, as a result of which "sticking" of said suitcases will be prevented, whilst furthermore the construction according to the invention makes it possible to design the conveyor such that at the place where the objects are to be removed therefrom the receiving means move at a height which enables a person to remove the objects without having to stoop deeply.

A particularly advantageous embodiment of the conveyor according to the invention is obtained when a receiving means comprises a third abutting plate-shaped part, whereby the third plate-shaped part is located furthest away from the side of the conveyor where objects present on the receiving means are removed and includes a greater angle with the horizontal than the other two plate-shaped parts.

The invention will be explained in more detail hereafter with reference to a few possible embodiments of the construction according to the invention illustrated in the accompanying Figures.

Figure 1 is a perspective view of a part of an endless conveyor according to the invention.

Figure 2 is a larger-scale diagrammatic cross-sectional view of the conveyor shown in Figure 1.

Figure 3 is a diagrammatic cross-sectional view of a second embodiment of a device according to the invention.

Figure 4 is a diagrammatic cross-sectional view of a third embodiment of a device according to the invention.

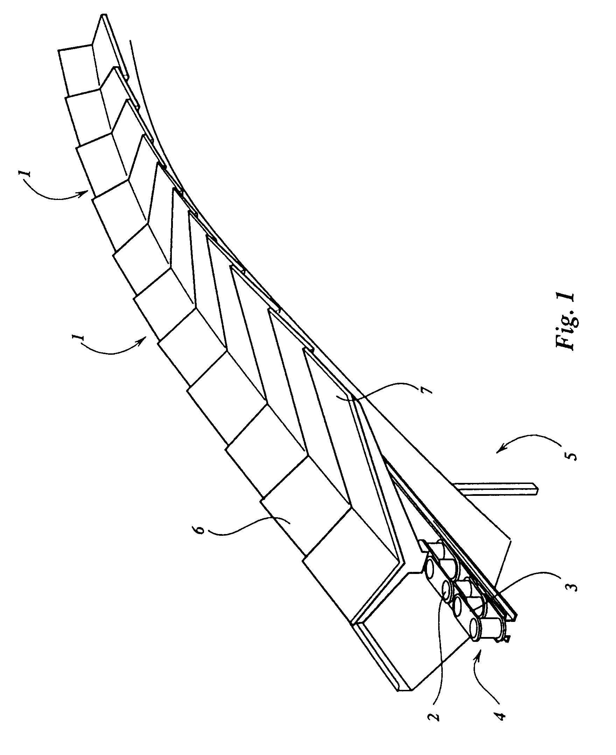

As is shown in Figure 1, the conveyor is provided with a plurality of receiving means 1 arranged in side-by-side relationship, which are secured to links 3 of an endless chain 4 which are pivotally interconnected by means of upwardly extending pins 2. The chain 4 is guided in a frame 5 of the conveyor and can be moved lengthwise by driving means (not shown).

Each receiving means is provided with two plate-shaped parts 6 and 7 including an angle with each other. As will be apparent in particular from Figure 1, the receiving means 1 are thereby arranged and coupled to the chain 4 in such a manner that the plate-shaped parts 6 and 7 of adjacent receiving means partially overlap.

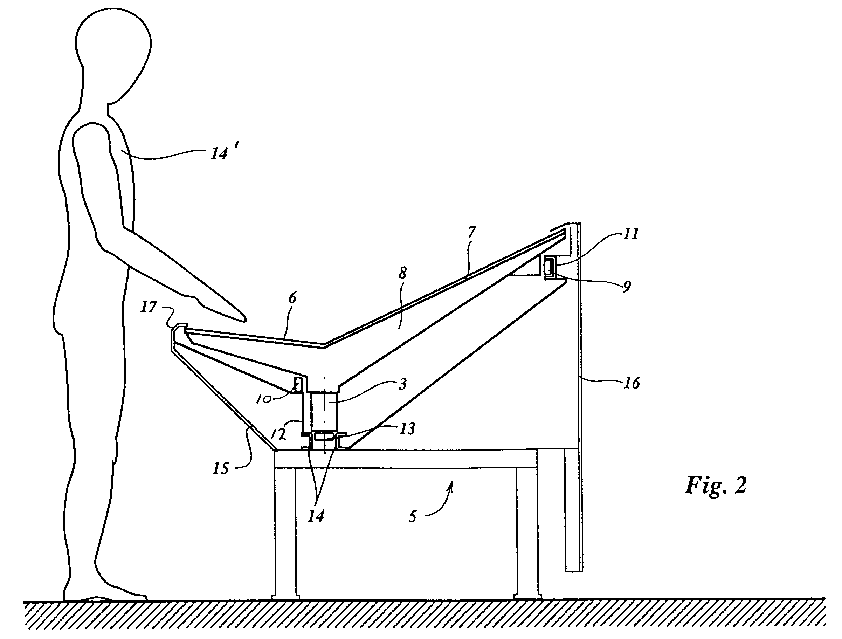

As is shown in more detail in Figure 2, two plate-shaped parts 6 and 7 abutting against each other with their facing edges and including an obtuse angle with each other are secured to a support 8, which is coupled to a link 3 of the chain 4. In the illustrated embodiment the receiving means is thereby guided by two rollers 9 and 10, which are rotatable about horizontal axes of rotation. The roller 9 thereby rolls in a U-shaped frame beam 11 forming part of the frame. The roller 10 rolls on a beam 12 likewise forming part of the frame.

Mounted on the bottom side of the links 3 are further guide rollers 13, which are rotatable about the axes of the pins 2 and which are passed between beams 14 forming part of the frame.

The construction is such that the shorter plate-shaped part 6, which extends from its edge abutting against the longer plate-shaped part 7 in the direction of the side of the conveyor where persons 14' can remove objects present on the conveyor, extends at an angle of ± 0 - 20° with respect to the horizontal, at least at that location. At that location the other plate-shaped part 7 extends from its edge abutting against the plate-shaped part 6 in a direction away from the plate-shaped part 6, at an angle of ± 10 - 30° with respect to the horizontal.

Cover plates 15 and 16 respectively are secured to the frame 5 on either side of the path in which the receiving means move during operation, said cover plates extending just above the free ends of the plate-shaped parts 6 and 7 with their upper edges. As will be apparent from Figure 2, the upper edge 17 projects hardly beyond the upper surface of the plate-shaped part 6 in the illustrated embodiment, so that said edge will not be in the way when removing objects.

The upper edge 17 may also be coplanar with or be positioned slightly below the outer edge of the plate-shaped part 6, however.

In order to facilitate the removal of objects even more, freely rotatable rollers might be provided on the edge 17 and/or on the ends of the plate-shaped parts 6 located near the edge 17, said rollers being rotatable about axes of rotation extending in the longitudinal direction of the edge 17.

As will furthermore be apparent from Figure 2, the plate-shaped part 6 may be disposed at a suitable height, for example at a height of ± 20 - 90 cm with its end located near the edge 17, so that a person 14' of average normal height standing beside the conveyor can take hold of an object present on a receiving means 1 without difficulty and subsequently lift and/or pull the object from the conveyor. If it is desired to avoid stooping, said height may be ± 80 - 90 cm. It will be apparent that a particularly user-friendly conveyor can be realized in this manner.

Furthermore it has become apparent that when the construction according to the invention is used, the receiving means can easily be pivoted in two opposite directions with respect to each other from a position in which the plate-shaped parts 6 and 7 of adjacent receiving means extend parallel to each other, without the receiving means becoming mutually wedged thereby, as a result of which there are far more possibilities to dispose a conveyor in the most efficient manner in certain buildings than with the conveyors that have been usual so far.

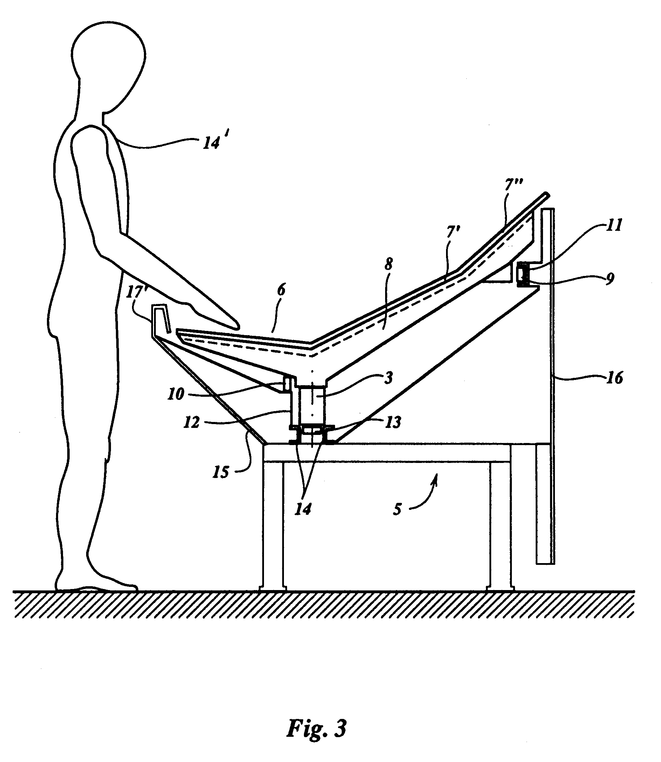

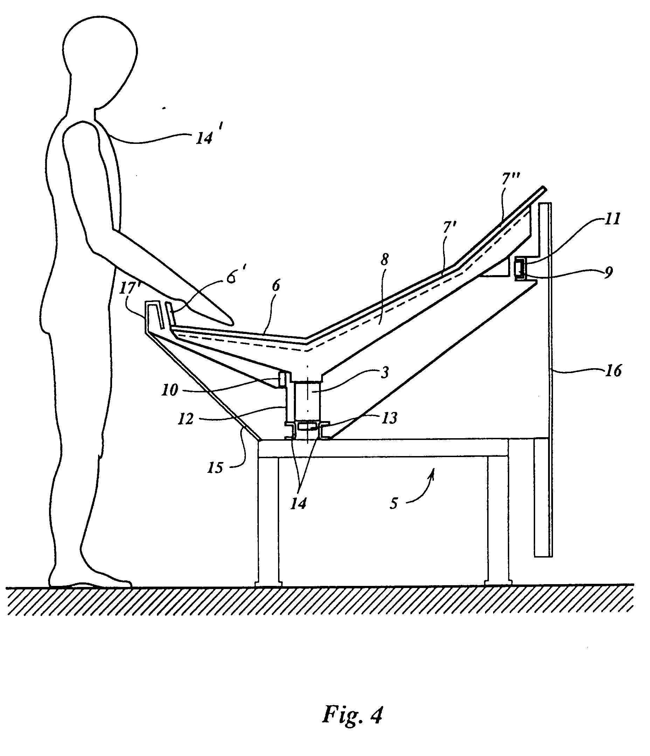

Of course further embodiments of the device according to the invention are possible within the spirit and scope of the invention, as is for example shown in Figures 3 and 4.

In Figures 3 and 4 those parts that correspond with parts of the device discussed above and illustrated in Figures 1 and 2 are indicated by the same reference numerals as in Figures 1 and 2.

Also the conveyor according to Figure 3 is provided with a plurality of receiving means 1 arranged in side-by-side relationship, thus forming an endless conveyor belt, which are secured to links 3 of an endless chain 4 which are pivotally interconnected by means of upwardly extending pins, which chain is guided in a frame 5 of the conveyor and which can be moved lengthwise by driving means (not shown).

Each receiving means is provided with three plate-shaped parts 6, 7' and 7'' including an angle with each other. As is also shown in Figures 1 and 2, the receiving means 1 are thereby arranged and coupled to the chain in such a manner that the plate-shaped parts 6, 7' and 7'' of adjacent receiving means partially overlap.

As is shown in more detail in Figure 3, the plate-shaped parts 6, 7' and 7', 7'' butting against each other with their facing edges and including an obtuse angle with each other are secured to a support 8, which is coupled to a link 3 of the chain. In the illustrated embodiment the receiving means is thereby guided by two rollers 9 and 10, which are rotatable about horizontal axes of rotation. The roller 9 rolls in a U-shaped frame beam 11 forming part of the frame. The roller 10 rolls on a beam 12 likewise forming part of the frame.

Further guide rollers 13 are mounted on the bottom side of the links 3, said rollers being rotatable about the axes of the pins connecting the links 3 and being passed between beams 14 forming part of the frame.

The construction according to Figure 3 is such that the shorter plate-shaped part 6, which extends from its edge abutting against the middle, longer plate-shaped part 7' in the direction of the side of the conveyor where persons 14' can remove objects present on the conveyor, extends at an angle of ± 0 - 20° with respect to the horizontal, at least at that location. At that location the middle plate-shaped part 7' extends from its edge abutting against the plate-shaped part 6 in a direction away from the plate-shaped part 6, at an angle of ± 10 - 30° with respect to the horizontal, whilst the outer plate-shaped part 7'' extends from its edge abutting against the middle plate-shaped part 7' at an angle of ± 30 - 55° with respect to the horizontal.

Cover plates 15 and 16 respectively are secured to the frame 5 on either side of the path in which the receiving means move during operation.

An end 17' of the plate 15 which is bent over to form a U extends above the free edges of the plate-shaped parts 6 along some distance, whereby the leg of the U-shaped edge 17' facing the receiving means 1 slopes upwards in a direction away from the receiving means 1.

The conveyor may be designed such that at the place where objects present on the conveyor, such as suitcases, are to be removed the plate-shaped parts 6 are disposed at a height of ± 20 - 90 cm above the floor with their ends located near the edge 17', so that a person 14' of average normal height standing beside the conveyor can take hold of an object present on a receiving means 1 and take it off the receiving means without difficulty. If it is desired to avoid stooping, said height may be ± 80 - 90 cm.

In particular larger suitcases will generally be supported on a plate-shaped part 6 and a plate-shaped part 7' or on a plate-shaped part 6 and a plate-shaped part 7'' with only two opposed longitudinal edges or transverse edges. As a result of this "sticking" of said suitcases to the respective receiving means will be prevented.

The embodiment according to Figure 4 substantially corresponds with the embodiment of Figure 3. In the embodiment of Figure 4, however, an upright strip 6' being integral with the plate-shaped part 6 or being secured thereto is provided along the boundary edge of the plate-shaped part 6 facing away from the plate-shaped parts 7' and 7''.

The strips 6' moving along with the receiving means extend in front of the bent edge 17' and thus prevent objects to be moved from sliding along said edge 17' and being slowed down and/or twisted as a result.

## Claims

1. An endless conveyor provided with a plurality of pivotally coupled receiving means (1) for receiving objects to be transported, said receiving means (1) each being provided with two plate-shaped parts (6, 7) including an obtuse angle with each other, whereby the plate-shaped parts (6, 7) of adjacent receiving means partially overlap and are capable of sliding movement over each other, whilst one plate-shaped part (7) has a greater length than a plate-shaped part (6) being adjacent thereto, seen in cross-sectional view, characterized in that the shorter (seen in cross-sectional view) plate-shaped part (6) extends from its abutment with the longer plate-shaped part (7) in the direction of the side of the conveyor where the objects present on the receiving means (1) are removed from the conveyor at an angle with the horizontal which is smaller than the angle which the longer (seen in cross-sectional view) plate-shaped part (7), which extends from its point of abutment with the shorter plate-shaped part (6) in a direction away from the side of the conveyor where the objects present on the conveyor are removed, includes with the horizontal.

2. A conveyor according to claim 1, characterized in that the shorter (seen in cross-sectional view) plate-shaped part (6) includes an angle of ± 0 - 20° with the horizontal.

3. A conveyor according to claim 1 or 2, characterized in that the longer plate-shaped part (7) butting against the shorter plate-shaped part (6) includes an angle of ± 10 - 30° with the horizontal.

4. An endless conveyor according to any one of the preceding claims, characterized in that the receiving means (1) comprises a third abutting plate-shaped part (7'') including an obtuse angle with the other two plate-shaped parts (6, 7'), whereby the third plate-shaped part (7'') is located furthest away from the side of the conveyor where objects present on the receiving means (1) are removed and includes a greater angle with the horizontal than the other two plate-shaped parts (6, 7').

5. An endless conveyor according to claim 4, characterized in that the third plate-shaped part (7'') includes an angle of ± 30 - 55° with the horizontal.

6. An endless conveyor according to any one of the preceding claims, characterized in that the free end of the plate-shaped part (6) located near the side of the conveyor where objects present on the receiving means (1) are removed from the conveyor is disposed at a height of ± 20 - 90 cm.

7. An endless conveyor according to any one of the preceding claims, characterized in that an upright edge (17) is provided near the side of the conveyor where objects present on the receiving means (1) are removed from the conveyor, whereby the boundary edge of said upright edge (17) facing the receiving means (1) slopes upwards in a direction away from said receiving means (1).

8. An endless conveyor according to any one of the preceding claims, characterized in that the plate-shaped parts (6) are provided with upwardly extending strips (6') at their boundary edges located near the side of the conveyor where objects present on the receiving means (1) are removed from the conveyor.

9. An endless conveyor according to any one of the preceding claims, characterized in that rollers (9, 10) being freely rotatable about horizontal axes of rotation and extending in the longitudinal direction of the conveyor are provided near the side of the conveyor where objects present on the receiving means (1) are removed from the conveyor.

## Patentansprüche

1. Mit einer Vielzahl von gelenkig gekoppelten Aufnahmemitteln (1) zum Aufnehmen zu transportierender Gegenstände versehener Endlosförderer, wobei die Aufnahmemittel (1) jeweils mit zwei plattenförmigen Teilen (6, 7) versehen sind, die miteinander einen stumpfen Winkel einschließen, wobei die plattenförmigen Teile (6, 7) benachbarter Aufnahmemittel sich teilweise überlappen und zu einer Gleitbewegung übereinander imstande sind, wobei ein plattenförmiges Teil (7), im Querschnitt gesehen, eine größere Länge als ein dazu benachbartes plattenförmiges Teil (6) aufweist, dadurch gekennzeichnet, daß das (im Querschnitt gesehen) kürzere plattenförmige Teil (6) sich von seiner Stoßverbindung mit dem längeren plattenförmigen Teil (7) in Richtung der Seite des Förderers, an welcher die auf den Aufnahmemitteln (1) vorhandenen Gegenstände von dem Förderer entfernt werden, in einem Winkel zur Horizontalen erstreckt, der kleiner als der Winkel ist, welchen das (im Querschnitt gesehen) längere plattenförmige Teil (7), welches sich von seinem Punkt der Stoßverbindung mit dem kürzeren plattenförmigen Teil (6) in einer von der Seite des Förderers, an welcher die auf dem Förderer vorhandenen Gegenstände entfernt werden, weg erstreckt, mit der Horizontalen einschließt.

2. Förderer nach Anspruch 1, dadurch gekennzeichnet, daß das (im Querschnitt gesehen) kürzere plattenförmige Teil (6) mit der Horizontalen einen Winkel von ± 0 - 20° einschließt.

3. Förderer nach Anspruch 1 oder 2, dadurch gekennzeichnet, daß das längere plattenförmige Teil (7), welches gegen das kürzere plattenförmige Teil (6) stößt, mit der Horizontalen einen Winkel von ± 10 - 30° einschließt.

4. Endlosförderer nach einem der voranstehenden Ansprüche, dadurch gekennzeichnet, daß das Aufnahmemittel (1) ein drittes anstoßendes plattenförmiges Teil (7'') aufweist, das mit den anderen zwei plattenförmigen Teilen (6, 7') einen stumpfen Winkel einschließt, wobei das dritte plattenförmige Teil (7'') am weitesten entfernt von der Seite des Förderers, an welcher die auf den Aufnahmemitteln (1) vorhandenen Gegenstände entfernt werden, angeordnet ist und einen größeren Winkel mit der Horizontalen einschließt, als die anderen zwei plattenförmigen Teile (6, 7').

5. Endlosförderer nach Anspruch 4, dadurch gekennzeichnet, daß das dritte plattenförmige Teil (7'') mit der Horizontalen einen Winkel von ± 30 - 55° einschließt.

6. Endlosförderer nach einem der vorstehenden Ansprüche, dadurch gekennzeichnet, daß das freie Ende des plattenförmigen Teils (6), das nahe der Seite des Förderers liegt, an welcher die auf den Aufnahmemitteln (1) vorhandenen Gegenstände von dem Förderer entfernt werden, in einer Höhe von ± 20 - 90 cm angeordnet ist.

7. Endlosförderer nach einem der vorstehenden Ansprüche, dadurch gekennzeichnet, daß nahe der Seite des Förderers, an welcher die auf den Aufnahmemitteln (1) vorhandenen Gegenstände von dem Förderer entfernt werden, eine aufrechte Kante (17) vorgesehen ist, wobei die den Aufnahmemitteln (1) zugewandte Grenzkante der aufrechten Kante (17) nach oben in einer von den Aufnahmemitteln (1) weggerichteten Richtung geneigt ist.

8. Endlosförderer nach einem der vorstehenden Ansprüche, dadurch gekennzeichnet, daß die plattenförmige Teile (6) an ihren Grenzkanten, die nahe der Seite des Förderers liegen, an welcher auf den Aufnahmemitteln (1) vorhandene Gegenstände von dem Förderer entfernt werden, mit sich nach oben erstreckenden Streifen (6') versehen sind.

9. Endlosförderer nach einem der vorstehenden Ansprüche, dadurch gekennzeichnet, daß Rollen (9, 10), die um horizontale Drehachsen herum frei drehbar sind und sich in der Längsrichtung des Förderers erstrecken, nahe der Seite des Förderers vorgesehen sind, an welcher auf den Aufnahmemitteln (1) vorhandene Gegenstände von dem Förderer entfernt werden.

## Revendications

1. Convoyeur sans fin comprenant une pluralité de moyens de réception couplés de façon pivotante (1) pour recevoir des objets à transporter,lesdits moyens de réception (1) comportant chacun deux éléments en forme de plaque (6,7) définissant ensemble un angle obtus, de sorte que les éléments en forme de plaque (6,7) de moyens de réception adjacents se chevauchent partiellement et peuvent effectuer un mouvement de glissement l'un sur l'autre, tandis qu'un élément en forme de plaque (7) a une longueur plus grande qu'un élément en forme de plaque (6) qui lui est adjacent, vu en section transversale, caractérisé en ce que l'élément en forme de plaque le plus court (6) (vu en coupe transversale) s'étend, à partir de sa butée avec l'élément en forme de plaque le plus long (7), dans la direction du côté du convoyeur où les objets présents sur les moyens de réception (1) sont retirés du convoyeur, suivant un angle avec l'horizontale qui est plus petit que l'angle que l'élément en forme de plaque le plus long (7) (vu en section transversale), qui s'étend à partir de son point de butée avec l'élément en forme de plaque le plus court (6), dans une direction opposée au côté du convoyeur où on retire les objets présents sur le convoyeur, définit avec l'horizontale.

2. Convoyeur suivant la revendication 1, caractérisé en ce que l'élément en forme de plaque le plus court (6) (vu en section transversale) définit un angle de ± O-20° avec l'horizontale.

3. Convoyeur suivant la revendication 1 ou 2, caractérise en ce que l'élément en forme de plaque le plus long (7), qui bute contre l'élément en forme de plaque le plus court (6), définit un angle de ± 10 - 30° avec l'horizontale.

4. Convoyeur sans fin suivant une quelconque des revendications précédentes, caractérisé en ce que les moyens de réception (1) comprennent un troisième élément en forme de plaque en butée (7'') définissant un angle obtus avec les deux autres éléments en forme de plaque (6, 7'), de sorte que le troisième élément en forme de plaque (7'') est le plus éloigné du côté du convoyeur où on enlève les objets présents sur les moyens de réception (1) et il définit avec l'horizontale un angle plus grand que l'angle des deux autres éléments en forme de plaque (6,7').

5. Convoyeur sans fin suivant la revendication 4, caractérisé en ce que le troisième élément en forme de plaque (7'') définit un angle de ± 30-55° avec l'horizontale.

6. Convoyeur sans fin suivant une quelconque des revendications précédentes, caractérisé en ce que l'extrémité libre de l'élément en forme de plaque (6) située près du côté du convoyeur où on enlève les objets présents sur les moyens de réception (1) est disposée à une hauteur de ± 20-90 cm.

7. Convoyeur sans fin suivant une quelconque des revendications précédentes, caractérisé en ce qu'un bord relevé (17) est prévu près du côté du convoyeur où les objets présents sur les moyens de réception (1) sont enlevés du convoyeur, de sorte que le bord délimitant ledit bord relevé (17) en face des moyens de réception (1) est incliné vers le haut dans une direction à l'opposé desdits moyens de réception (1).

8. Convoyeur sans fin suivant une quelconque des revendications précédentes, caractérisé en ce que les éléments en forme de plaque (6) sont pourvus de bandes s'étendant vers le haut (6') à leurs bords de délimitation situés près du côté du convoyeur où les objets présents sur les moyens de réception (1) sont enlevés du convoyeur.

9. Convoyeur sans fin suivant une quelconque des revendications précédentes, caractérisé en ce que des galets (9,10), pouvant tourner librement autour d'axes de rotation horizontaux et s'étendant dans la direction longitudinale du convoyeur, sont prévus prés du côté du convoyeur où les objets présents sur les moyens de réception (1) sont enlevés du convoyeur.
